# EUROPEAN PATENT APPLICATION

(11) **EP 2 361 892 A1**
(43) Date of publication of application: **31.08.2011**
(21) Application number: 11155852.4
(22) Date of filing: 24.02.2011
(51) Int. Cl.: C03C 15/00

(54) **Method for satinizing glass items**

(30) Priority: 26.02.2010 IT PR20100012
(71) Applicant: Omni Decor Logistica S.p.A., 23900 Lecco (IT); Sapi Impianti S.r.l., 53031 Casole d'Elsa (Siena) (IT)
(72) Inventor: Bresciani, Ferruccio, 22066 Mariano Comese (Como) (IT)
(74) Representative: Gotra, Stefano

(57) **Abstract**

A method for satinizing glass items comprising the steps of:
a) treating a glass item with an acidic satinising solution having a content of ammonium salts less than or equal to 20% by weight, or devoid of ammonium salts;
b) immersing the item obtained after step a) in an aqueous solution and submitting it to a treatment with ultrasonic waves.

The invention also relates to a glass satinizing system equipped with at least one ultrasound generating device, placed in at least one of the tubs making up the system.

## Description

The present invention relates to a method for satinizing glass items. In particular, the present invention relates to a method a method for producing glass items in which the satin finish is obtained by using acidic satinizing solutions with little or no content of ammonium salts.

The term satinization refers to a process in which glass items (containers, sheets or other objects) are immersed in a special satinizing solution (normally an acidic solution), which by virtue of a corrosive chemical reaction modifies the surface appearance of the glass from glossy to translucent or matte, due to the transformation of the surface from polished to rough.

The satinization process generally comprises a step of immersing the item in a satinizing solution for a time ranging from a few seconds to a few minutes, followed by one or more rinsing steps and a final drying step.

The satinizing solutions most widely used in the industry at present are fluoride-based solutions, above all ammonium difluoride, dissolved in fluoridric or chloridric acid. Other salts may be present in the formulation together with insoluble compounds, such as, for example, barium sulphate. Some examples of satinizing solutions of this type can be found in the patent publications GB 1276550, SU 1675244, EP 1108773 and FR 0550927.

The ammonium salt-based satinizing solutions commonly used in the industry present limitations tied to the disposal of process waste. In fact, the high quantity of ammonium salts present in the waste solutions of known satinizing processes and the low effluent limits imposed by current legislation require the implementation of complex, costly waste effluent treatment and purification devices in satinization systems.

To avoid the environmental problems deriving from the use of ammonium salt-based satinizing solutions, innovative solutions with a low content of ammonium ions have been developed.

Such solutions are essentially based on the use of potassium or sodium difluoride, mixed with other fluorinated and non-fluorinated salts.

Examples of these solutions can be found in the previously cited patent publications, as well as in JP 334841 and BR 8501205.

However, the use of satinizing solutions comprising a low content of ammonium salts entails a negative consequence in the satinizing process, i.e. the formation of a layer of potassium or sodium fluosilicate that is rather adherent to the surface of the glass, and difficult or impossible to remove using common industrial immersion rinsing cycles. Even pressure spray rinsing proves ineffective.

Some rinsing processes that permit the removal of fluosilicate residue are described in the literature. For example, EP 1160213 describes a removal procedure in which the satinized items are rinsed first in water and then in a solution containing from 5 to 20% of one or more alkali metal or alkaline earth metal salts, such as, for example, a 10% NaCl solution. These rinse solutions can also contain anionic and cationic surfactants or surfactants of another nature, in percentages ranging for example between 0.5 and 5%.

The satinization method described above is however very costly to implement, given the long time required for the rinse cycles and the complexity of the satinization system.

Moreover, from an environmental standpoint, the use of a solution with a high saline content creates further problems related to the management and disposal of the waste solutions.

In fact, besides the residues of satinization, high saline concentrations (e.g. chlorinated salts) are also present in the rinse solutions; the satinization residues in the saline solution increase progressively unless a preliminary rinse is carried out; larger volumes of waste solutions are produced due to the necessity of a second rinse after the passage in the saline solution.

In this context, the technical problem at the basis of the present invention is to provide a method for satinizing glass items that has a reduced environmental impact and can be implemented in already existing systems by making limited changes. Said technical problem is resolved by a method for satinizing glass items comprising the steps described in one or more of the appended claims.

The present invention is described in detail hereunder, also with reference to the appended drawing, in which:

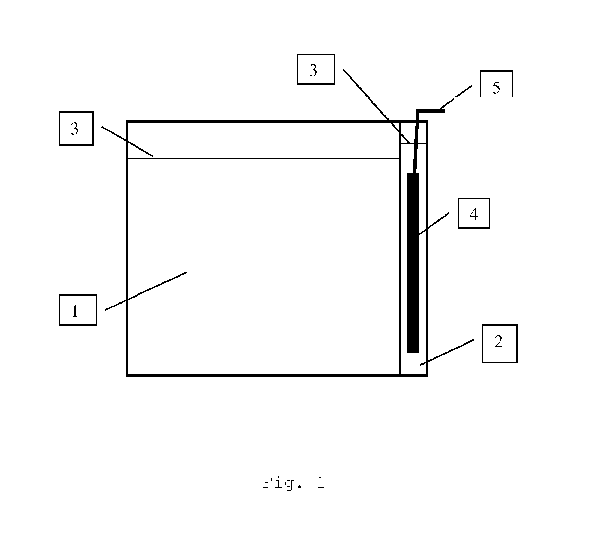

- Figure 1 shows a lateral cross section of the tub and of the device for removing the saline satinization residue comprising fluosilicates, according to the invention.

The present invention regards a method for satinizing glass items comprising the steps of:
a) treating a glass item with an acidic satinizing solution having a low content of ammonium salts, preferably less than or equal to 20% (by weight), or else devoid of ammonium salts;
b) immersing the item obtained after step a) in an aqueous solution and submitting it to a treatment with ultrasonic waves.

The satinizing solution of step a) preferably usable in the method of the invention is a solution of fluoridric or chloridric acid comprising difluoride salts, preferably potassium and/or sodium difluoride. In a preferred embodiment, the solution also comprises other fluorinated and non-fluorinated salts, such as sodium fluosilicate, sodium fluoride and sodium and/or potassium sulphates or chlorides. The treatment of the glass item with the satinizing solution takes place by immersing the product in the solution.

The glass item is advantageously immersed in the satinizing solution for a period of time ranging between 10 and 40 seconds, preferably between 15 and 25 seconds; if necessary the solution is subjected to constant agitation.

The temperature of the satinizing solution ranges between 20°C and 40°C, preferably between 25°C and 35ºC.

The ultrasonic wave treatment step b) is conducted for a period of time ranging between 5 and 20 seconds, preferably between 8 and 15 seconds.

The frequency of the ultrasonic waves preferably used in the invention ranges between 20 and 60 KHz, preferably between 25 and 40 KHz.

The power used advantageously ranges between 1 W/litre and 5 W/litre, preferably 1.5 and 3.5 W/litre.

The mechanical effect of compression and cavitation produced by the ultrasound is capable of totally detaching and dispersing the saline residue, for example of potassium fluosilicate, adhering to the glass in just a few seconds.

The ultrasound treatment is conducted by immersing the item to be treated in an aqueous solution present inside a rinse tub provided with a device for generating the ultrasonic waves.

Said device preferably comprises one or more ultrasonic transducers, for example of the immersible type, or of the flanged wall-mount type, depending on the volume and characteristics of the rinsing tub. Therefore, the invention further relates to a glass satinizing system equipped with at least one ultrasound generating device, for example one or more ultrasonic transducers, placed in at least one of the tubs making up the system.

The ultrasound generating device is placed in an internal or external pocket of the tub, which can be filled with an aqueous solution, for example an alkaline solution with a pH of between 9 and 10.

The device transmits the ultrasound to the rinsing tub through one or more walls or diaphragms of the pocket communicating with one or more tubs of the system.

Alternatively, the ultrasound generating device can be placed in direct contact with the aqueous solution for rinsing the satinized items.

The pocket is preferably provided with an automatic continuous reading pH meter, immersed in the aqueous solution present in the pocket, which signals any acid contamination of the solution in which the ultrasound generating device is immersed.

A preferred, but non-restrictive, embodiment of the rinsing tub according to the invention is illustrated in figure 1, in which 1 indicates a rinsing tub in which water is introduced up to a level 3.

The tub comprises a side pocket 2 in which there is inserted an ultrasound generating device 4, provided with a connection 5, comprising preferably one or more ultrasonic transducers, for example of the immersible or wall-mount flanged type, depending on the volume and characteristics of the rinsing tub.

The ultrasound generating device is activated upon the immersion of an item in the rinsing tub. The item is held in a suspended position in the tub by means of suitable supporting frames.

To avoid possible corrosion on the steel of the transducers, caused by the acids released by the items during rinsing, the transducers are preferably placed in a special housing or pocket filled with water or another suitable solution, separated by a diaphragm or wall made of the same plastic material as the rinsing tub, as illustrated in the figure.

The diaphragm or part of the pocket has a thickness ranging between 1 and 4 mm, preferably between 1.5 and 2.5 mm.

For example, by way of precaution an alkaline aqueous solution at a pH of about 9-10 can be used to protect the ultrasound generating device from possible acid contaminations of the rinsing solution.

In the pocket containing the ultrasound generating device, a pH meter is positioned for continuous measurement of the pH of the water, in order to prevent phenomena of corrosion caused by possible pollution of the water contained in the pocket with the acids used in the process or with the residues released by the satinized items.

The method for satinizing glass items of the invention may comprise a step c), downstream of steps a) and b), of rinsing the treated item by immersing it in at least one tub containing water at room temperature.

The method may also comprise a further step d) of extracting the items from rinsing tub and drying them.

In a particularly preferred embodiment, the method comprises a further step c1) of treating the item with ultrasonic waves. This further treatment is performed after step c).

The treatment comprises immersing the item in a rinsing tub containing an alkaline aqueous solution, preferably a solution of NaOH. The item is immersed in the alkaline solution and submitted to the ultrasonic treatment for a period of time ranging between 10 and 50 seconds, preferably between 20 and 40 seconds. The ultrasonic waves are used at a power ranging between 5 and 30 W/litre, preferably between 8 and 18 W/litre.

The solution is maintained at a temperature ranging between 20°C and 50°C, preferably between 30°C and 45°C.

For this step the ultrasound generating device è immersed directly in the rinsing tub.

This further ultrasound treatment is used to remove the temporary protective coatings, applied whenever for decorative purposes a given surface zone of the item must be protected from the satinizing process.

A non-satinized pattern is produced on a item where the entire remaining surface must be satinized by applying an acid-resistant coating or organic enamel by means of a normal process of decoration. In the subsequent satinization step the coating protects the area on which it was applied, thus maintaining the transparency typical of glass.

Once the item has been rinsed, the coating must be mechanically removed by means of high pressure jets of a highly alkaline solution, which strike the items, suitably secured to a conveyor system, from the sides and from below. The solution falls into a collection tub and is drawn up again by the pumps which supply the cleaning nozzles. This operation is usually carried out automatically in a specific section of the satinizing system.

The same operation of removing the protective coating can be carried out more simply, and hence more advantageously in an ultrasonic tub by immersing the items in the alkaline solution, which may be heated if necessary. In this case, except for normal aspiration, there is no need to adopt safety guards. As an alkaline solution is involved, for this step of the process use is preferably made of a stainless steel tub in which the ultrasound generating device is immersed.

After this further ultrasound treatment, the item is submitted to rinsing in a tub containing water and then extracted from the tub and dried.

In an alternative embodiment, the satinizing method of the invention can also comprise a single ultrasound treatment at a high power ranging between 5 and 30 W/litre and capable of simultaneously removing the satinization residue and the coating.

### EXAMPLES

### Example 1

A satinization test was performed on items for cosmetics in a system provided with 700 litre tubs of the type schematically illustrated in figure 1, equipped with 25KHz piezoelectric ultrasonic transducers, so as to have a maximum theoretical power of 11.4 W/litre of satinizing solution. The satinizing solution, of the type free of ammonium salts (content less than 1% by weight), is made up of a mixture of 40% fluoridric acid, potassium and sodium difluorurate (in a reciprocal ratio of preferably around 1:5), adjuvant compounds (alkaline chlorides or sulphates) in a total amount of less than 5% and an inert salt such as barium suplphate in an amount of around 30%.

The cycle adopted was the following:
a) immersion of the items for 30" in the satinizing solution (described above) maintained at 30°C under constant agitation;
b) transfer into a tub containing water at room temperature, of the type schematically illustrated in figure 1;
c) activation of the ultrasound for 10" at the theoretical power of 2.5 W/litre;
d) transfer into a rinsing tub;
e) extraction and drying of the items.

### Example 2

In the same system as in the preceding example, using the same satinizing solution as in Example 1, bottles were treated with part of their surface protected by an acid-resistant coating in order to obtain non-satinized decorative patterns.

The satinizing cycle is analogous to the above-described one up to step d):
a) immersion of the items for 30" in the satinizing solution maintained at 30°C under constant agitation;
b) transfer into a tub containing water at room temperature, of the type schematically illustrated in figure 1;
c) activation of the ultrasound for 10" at the theoretical power of 2.5 W/litre;
d) transfer into a rinsing tub;
e) immersion in a tub containing a 10% NaOH solution maintained at 40°C, in which ultrasonic transducers of the type described above are directly immersed. The alkaline solution does not possess properties that are corrosive to the steel case of the transducers. In order to completely detach the protective coating, the ultrasound works at a theoretical power of 11.4 W/litre for 30" ;
f) transfer into a rinsing tub;
g) extraction and drying of the items.

### Example 3

A satinization test was performed on items for cosmetics, using the same satinizing solution as in example 1, in a system provided with 100 litre tubs of the type schematically illustrated in figure 1, equipped with 40KHz piezoelectric ultrasonic transducers, so as to have a maximum theoretical power of 10 W/litre of satinizing solution.

The satinizing cycle is analogous to the one described in example 1 and equivalent in its results. The invention further relates to a satinized item obtained by means of the satinizing process of the invention.

## Claims

1. A method for satinizing glass items comprising the steps of:
a) treating a glass item with an acidic satinizing solution having a content of ammonium salts less than or equal to 20% by weight, or devoid of ammonium salts;
b) immersing the item obtained after step a) in an aqueous solution and submitting it to a treatment with ultrasonic waves.

2. The method according to claim 1, wherein said satinizing solution is a solution of fluoridric or chloridric acid comprising difluoride salts, preferably potassium and/or sodium difluoride, and possibly comprising also other fluorinated and non-fluorinated salts.

3. The method according to claim 1 or 2, wherein said ultrasonic wave treatment step b) is conducted for a period of time ranging between 5 and 20 seconds, preferably between 8 and 15 seconds.

4. The method according to any of the claims 1 to 3, wherein said ultrasonic waves are used at a frequency ranging between 20 and 60 KHz, preferably between 25 and 40 KHz.

5. The method according to any of the claims 1 to

6. 4, wherein said ultrasonic waves are used at a power ranging between 1 W/litre and 5 W/litre, preferably between 1.5 and 3.5 W/litre.

7. The method according to any of the claims 1 to 5, further comprising a step c), downstream of steps a) and b), of rinsing the treated item by immersing it in at least one tub containing water at room temperature.

8. The method according to any of the claims from 1 to 6, further comprising a step c1) of treating the item with ultrasonic waves, performed after step c).

9. The method according to claim 7, wherein said step c1) comprises the steps of:
(i) immersing said item in an alkaline aqueous solution, preferably a solution of NaOH;
(ii) treating said item immersed in the solution with ultrasonic waves.

10. The method according to claim 8, wherein said ultrasonic treatment is conducted for a period of time ranging between 10 and 50 seconds, preferably between 20 and 40 seconds.

11. The method according to claim 8 or 9, wherein said ultrasonic waves are used at a power ranging between 5 and 30 W/litre, preferably between 8 and 18 W/litre.

12. The method according to claim 2, wherein the non-fluorinated salts are selected from among sodium fluosilicate, sodium fluoride, sodium sulphate, potassium sulphate, sodium chloride and potassium chloride.

13. A glass satinizing system equipped with at least one ultrasound generating device, placed in at least one of the tubs making up the system.

14. The system according to claim 12, wherein said ultrasound generating device is placed in an internal or external pocket of at least one of the tubs making up the system, possibly filled with an alkaline aqueous solution.

15. The glass satinizing system according to claim 12 or 13, wherein said ultrasound generating device comprises one or more ultrasonic transducers of the immersible or flanged type.
